# EUROPEAN PATENT SPECIFICATION

(11) **EP 2 490 285 B1**
(45) Date of publication and mention of the grant of the patent: **24.12.2014**
(21) Application number: 10823175.4
(22) Date of filing: 06.10.2010
(51) Int. Cl.: H01M 4/134, H01M 4/62, H01M 4/38, H01M 4/1395

(54) **NEGATIVE ELECTRODE FOR NON-AQUEOUS ELECTROLYTE SECONDARY BATTERY, AND PROCESS FOR PRODUCTION THEREOF**
NEGATIVE ELEKTRODE FÜR EINE NICHTWÄSSRIGE SEKUNDÄRBATTERIE SOWIE HERSTELLUNGSVERFAHREN DAFÜR
ELECTRODE NÉGATIVE POUR BATTERIE AUXILIAIRE NON AQUEUSE ET SON PROCÉDÉ DE FABRICATION

(30) Priority: 14.10.2009 JP 2009236986
(43) Date of publication of application: 22.08.2012
(73) Proprietor: KABUSHIKI KAISHA TOYOTA JIDOSHOKKI, Kariya-shi, Aichi 448-8671 (JP)
(72) Inventor: HIROSE, Takayuki, Kariya-shi Aichi 448-8671 (JP); MIYOSHI, Manabu, Kariya-shi Aichi 448-8671 (JP); MURASE, Hitotoshi, Kariya-shi Aichi 448-8671 (JP); GODA, Hideki, Osaka-shi Osaka 538-0053 (JP); IZUMOTO, Kazuhiro, Osaka-shi Osaka 538-0053 (JP)
(74) Representative: TBK
(86) International application number: PCT/JP2010/005981
(87) International publication number: WO 2011/045907

(56) References cited:
- EP-A1- 2 482 369
- JP-A- 61 176 006
- JP-A- 2007 227 328
- JP-A- 2009 043 678
- JP-A- 2009 043 678
- US-A1- 2006 099 506

## Description

### TECHNICAL FIELD

The present invention is one which relates to a non-aqueous-system secondary battery. In particular, it is one which relates to a negative electrode to be used for non-aqueous-system secondary battery.

### BACKGROUND ART

Secondary batteries, such as lithium-ion secondary batteries, have been used in a wide variety of fields like cellular phones and notebook-size personal computers, because they are compact and have large capacities. A lithium-ion secondary battery has active materials, which can insert lithium (Li) thereinto and eliminate it therefrom, for the positive electrode and negative electrode, respectively. And, it operates because the Li ions migrate within an electrolytic solution that is disposed between both the electrodes.

The performance of secondary battery is dependent on electrode materials that constitute the secondary battery. For example, it has been often the case that lithium metal or lithium alloy is employed as an active material in the electrode materials for lithium secondary battery, because batteries with high energy density are obtainable. Moreover, active materials, which comprise silicon (Si), an element that is capable of forming alloys with lithium, have also been attracting attention recently. For example, a non-aqueous-electrolyte secondary battery, which uses LiₓSi (0 ≦ x ≦ 5) as the negative-electrode active material, has been known.

However, it has been known that an active material like LiₓSi including silicon (being abbreviated to as "silicon-system active material") expands and contracts due to charging/discharging cycles. Since the silicon-system active material expands and contracts so that loads are applied to a binding agent that fulfils a role of retaining the silicon-system active material onto a current collector, there are the following problems: the adhesiveness between the silicon-system active material and the current collector might decline; and electrically conductive paths within electrode are destroyed so that the capacity might decline remarkably. As a result, the durability of battery, the cyclic longevity, for instance, declines.

In order to upgrade the adhesiveness between current collector and active material, it has been set forth in Patent Literature No. 1 that treatments for roughening the surface of current collector can be carried out. And, in order to upgrade the durability of battery using a silicon-system active material, it has been known commonly that it is necessary to roughen current collectors. Moreover, it has been set forth in Patent Literature No. 2 that, in order to suppress the coming-off of a silicon-system active material from a current collector that arises due to the expansion and contraction of the silicon-system active material, a surface of the current collector is provided with irregularities. In Patent Literature No. 3, a binder resin has been disclosed, binder resin which can prevent the pulverization or detachment of silicon-system active material that is accompanied by the expansion and contraction.

EP2482369 (A1) relates to a negative electrode for lithium-ion secondary battery, a negative electrode which has good cyclability by suppressing the active material from coming off or falling down from the current collector, and a manufacturing process for the same. It is characterized in that, in a negative electrode for lithium-ion secondary battery, the negative electrode having a current collector and an active-material layer being bound on a surface of the current collector, the active-material layer includes active materials, binders, conductive additives, and buffer materials, the active materials include Si and/or Sn, and the buffer materials comprise a silicone composite powder in which a spherical silicone-rubber powder is covered with a silicone resin. The binder resin may be a polyimide resin or an alkoxy group-containing silane-modified polyamic acid.

US2006099506 (A1) relates to polyimide binders having decreased aromatic carbonyl content prepared by reacting an aromatic dianhydride and a diamine, the disclosed polyimide binders.

### Related Technical Literature

### Patent Literature

Patent Literature No. 1: Japanese Unexamined Patent Publication (KOKAI) Gazette No. 2008-140,809;
Patent Literature No. 2: Japanese Unexamined Patent Publication (KOKAI) Gazette No. 2008-300,255; and
Patent Literature No. 3: Japanese Unexamined Patent Publication (KOKAI) Gazette No. 2009-43, 678, also published as EP 2 178 140 A1.

### DISCLOSURE OF THE INVENTION

### Assignment to be Solved by the Invention

Even in the case of using a silicon-system active material for negative electrode, roughening the surface of current collector as set forth in Patent Literature No. 1 and Patent Literature No. 2 seems effective in view of the durability of battery. In this instance, since it is often the case that an active material is retained on the opposite faces of current collector, it is necessary to make the surface roughness equal to each other approximately between the front and back faces of current collector in order to make the durability equal to each other in the opposite faces of electrode. However, an advanced technique is required in order to process the surface roughness of current collector to an equal roughness in the front and back faces. Moreover, carrying out a roughening treatment per se leads to the rise in manufacturing cost.

Since a silicon-system active material is turned into a vapor-deposited film in order to fix it onto the surface of current collector so that no binding agent is used in Patent Literature No. 2, it is not at all the case that loads being applied to a binding agent are reduced. Moreover, although binding agents are studied in Patent Literature No. 3, it is required that the performance be upgraded furthermore.

Hence, the present invention aims at providing a negative electrode for non-aqueous-system secondary battery, negative electrode which makes it possible to constitute a non-aqueous-system secondary battery exhibiting high durability by using a specific binding agent with respect to negative-electrode active materials including silicon.

### Means for Solving the Assignment

A negative electrode for non-aqueous-system secondary battery according to the present invention is characterized in that:
it is equipped with a negative-electrode current collector, and a negative-electrode mixture-material layer comprising a negative-electrode mixture material that includes a negative-electrode active material containing silicon (Si) and a binding agent at least, the negative-electrode mixture-material layer being formed on a surface of the negative-electrode current collector; and
said binding agent includes a polyimide-silica hybrid resin being made by subjecting a silane-modified polyamic acid to sol-gel curing and dehydration ring-closing, the silane-modified polyamic acid being expressed by the following formula (wherein: "R¹" specifies an aromatic tetracarboxylic dianhydride residue including 3,3',4,4'-biphenyltetracarboxylic dianhydride residue in an amount of 90% by mole or more; "R²" specifies an aromatic diamine residue including a 4,4'-diaminodiphenyl ether residue in an amount of 90% by mole or more; "R³" specifies an alkyl group whose number of carbon atoms is from 1 to 8; "R⁴" specifies an alkyl group or an alkoxy group whose number of carbon atoms is from 1 to 8 independently of one another; "q" is from 1 to 5,000; "r" is from 1 to 1,000; and "m" is from 1 to 100),
wherein a surface roughness of said negative-electrode current collector is 4,5 µm or less by ten-point average roughness (or Rz).

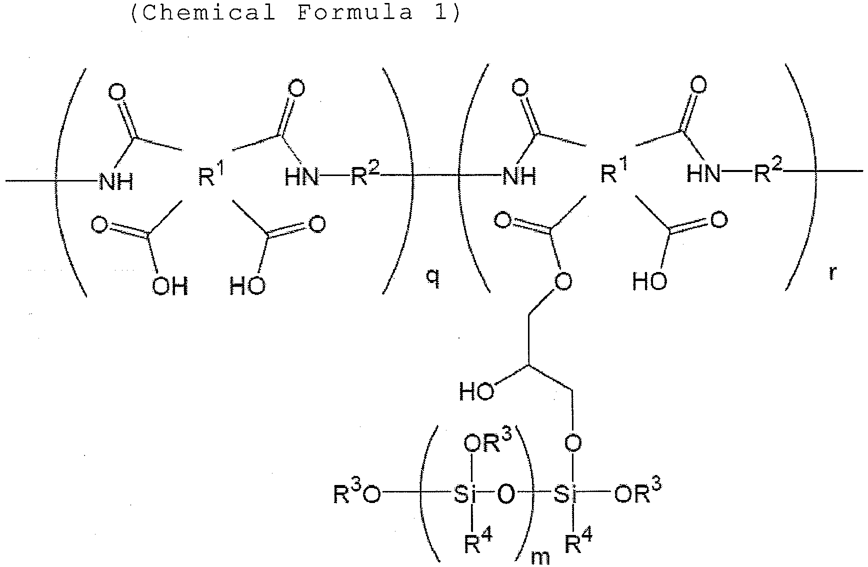

In the negative electrode for non-aqueous-system secondary battery according to the present invention, a silicon-system active material including Si is employed as a negative-electrode active material. Although expansion/contraction occurs in the silicon-system active material due to charging/discharging cycles as described above, the durability of the negative electrode for non-aqueous-system secondary battery according to the present invention upgrades by employing a binding agent including the aforementioned polyimide-silica hybrid resin with respect to this silicon-system active material. Although the reason has not been apparent yet, it is believed as follows.

In the negative electrode for non-aqueous-system secondary battery according to the present invention, the silane-modified polyamic acid being expressed by the aforementioned formula is adapted into a precursor for the polyimide-silica hybrid resin to be included in the binding agent. This silane-modified polyamic acid has a block copolymerized structure being constituted of first segments of polyamic acid and second segments of polyamic acid. And, one of the segments of polyamic acid comprises silane-modified polyamic acid, and has alkoxysilane partial condensates, reactive inorganic components, on the side chains. The alkoxysilane partial condensates form inorganic parts including silica by means of sol-gel reaction. It is believed that these inorganic parts not only form intermolecular crosslinks but also contribute to the adhesiveness between the negative-electrode current collector and the negative-electrode active material. Moreover, it is believed that the other segments of polyamic acid, especially, the segments of polyamide acid not having undergone silane modification, contribute to the mechanical characteristics of the polyimide-silica hybrid resin. That is, it is required for the binding agent to be employed together with the silicon-system active material to exhibit mechanical characteristics that are endurable against loads of repetitive stresses that occur due to the expansion and contraction of the silicon-system active material that are accompanied by charging/discharging cycles. Since the binding agent including the polyimide-silica hybrid resin whose polyimide sections have the specific structure is likely to follow the expansion and contraction of the silicon-system active material that are accompanied by charging/discharging cycles, it is believed that, in the negative electrode for non-aqueous-system secondary battery according to the present invention, the battery characteristics can be maintained even at higher numbers of cycles, namely, even after being subjected to charging/discharging repeatedly.

Moreover, in the negative electrode for non-aqueous-system secondary battery according to the present invention, a surface roughness of said negative-electrode current collector is 4.5 µ m or less by ten-point average roughness (or Rz), and can furthermore be from 1.5 to 3 µm. Electrically conductive materials to be employed as current collector do not at all show any high surface-roughness value unless certain roughening treatment is performed onto their surface. The negative electrode for non-aqueous-system secondary battery according to the present invention excels in the durability without ever employing any current collector whose surface has been roughened.

Moreover, a manufacturing process for negative electrode for non-aqueous-system secondary battery according to the present invention is characterized in that a negative electrode including a polyimide-silica hybrid resin that serves as a binding agent is obtained via the following:
a preparation step of preparing composition for forming negative-electrode mixture-material layer, wherein a composition for forming negative-electrode mixture-material layer is prepared, the composition including a negative-electrode active material, which includes silicon (Si), and a binding-agent raw-material solution, which includes the aforementioned silane-modified polyamic acid;
a formation step of forming negative-electrode mixture-material layer, wherein said composition is provided to a current collector, wherein a surface roughness of said negative-electrode current collector is 4,5 µm or less by ten-point average roughness (or Rz), in order to form a negative-electrode mixture-material layer; and
a heating step of heating said negative-electrode mixture-material layer in order to have said silane-modified polyamic acid undergo sol-gel curing and dehydration ring-closing.

### Effect of the Invention

The negative electrode for non-aqueous-system secondary battery according to the present invention, and negative electrodes for non-aqueous-system secondary battery being manufactured by means of the manufacturing process according to the present invention excel in the durability.

### BRIEF DESCRIPTION OF THE DRAWINGS

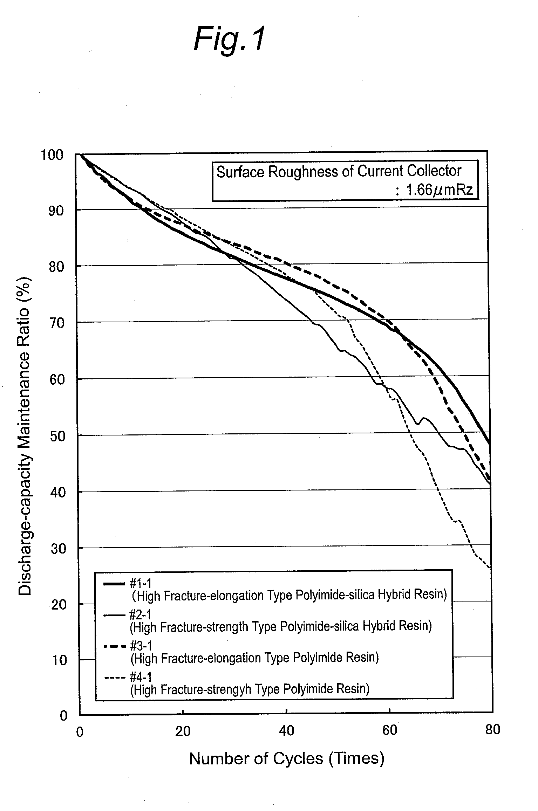

Fig. 1 is a graph that illustrates results of a charging/discharging test using a battery (e.g., #1-1) that was equipped with a negative electrode for non-aqueous-system secondary battery according to the present invention as well as batteries that were equipped with conventional negative electrodes (e.g., #2-1, #3-1, and #4-1), and shows the discharge-capacity maintenance ratios with respect to the increase in the number of cycles;

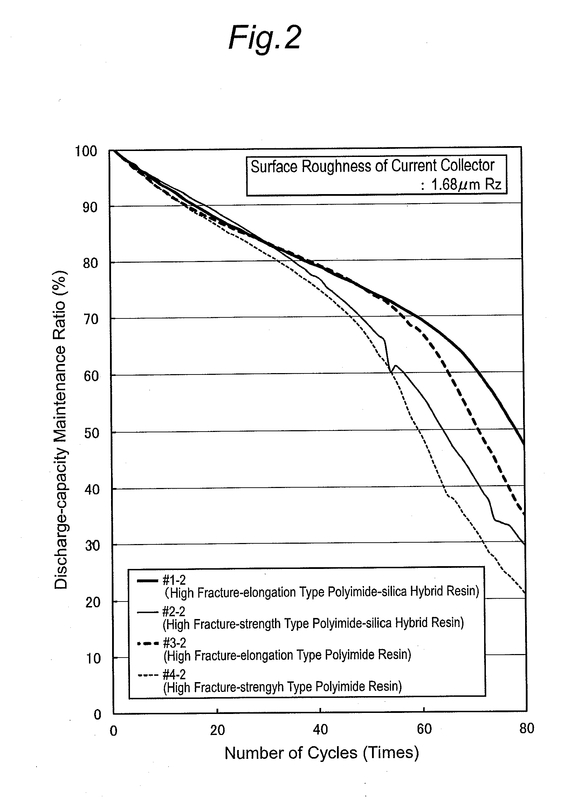

Fig. 2 is a graph that illustrates results of a charging/discharging test using a battery (e.g., #1-2) that was equipped with a negative electrode for non-aqueous-system secondary battery according to the present invention as well as batteries that were equipped with conventional negative electrodes (e.g., #2-2, #3-2, and #4-2), and shows the discharge-capacity maintenance ratios with respect to the increase in the number of cycles;

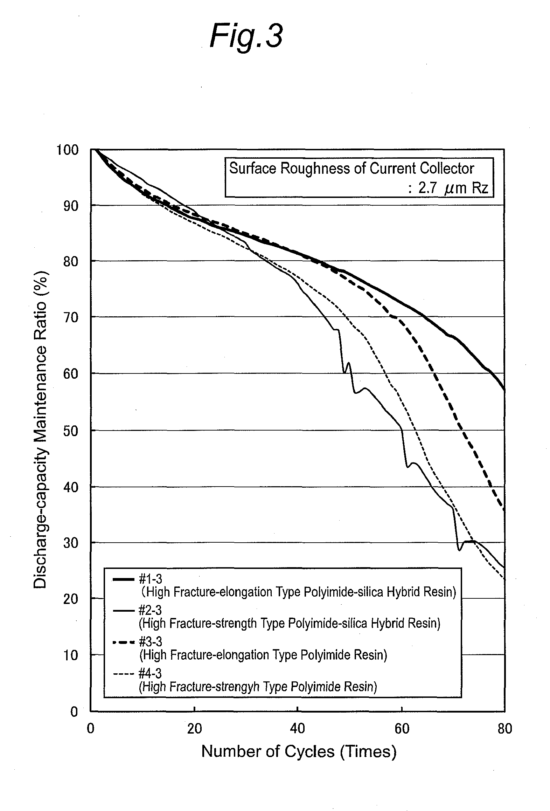

Fig. 3 is a graph that illustrates results of a charging/discharging test using a battery (e.g., #1-3) that was equipped with a negative electrode for non-aqueous-system secondary battery according to the present invention as well as batteries that were equipped with conventional negative electrodes (e.g., #2-3, #3-3, and #4-3), and shows the discharge-capacity maintenance ratios with respect to the increase in the number of cycles;

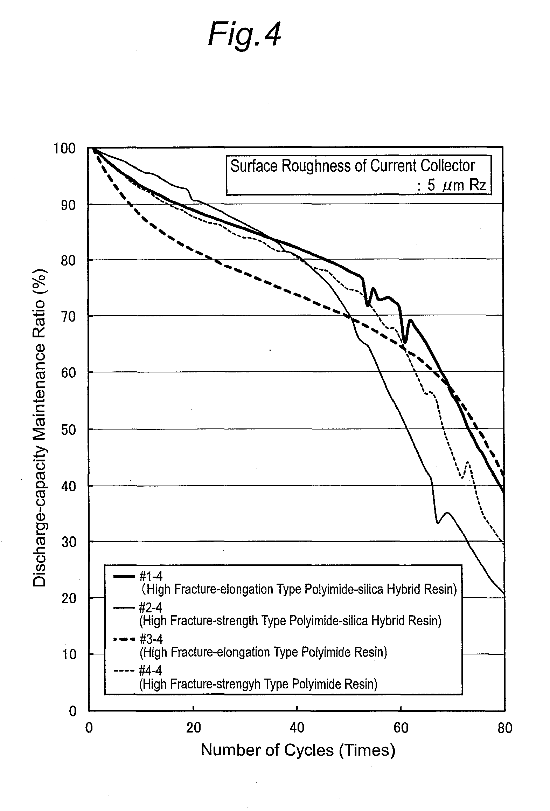

Fig. 4 is a graph that illustrates results of a charging/discharging test using a battery (e.g., #1-4) that was equipped with a negative electrode for non-aqueous-system secondary battery according to the present invention as well as batteries that were equipped with conventional negative electrodes (e.g., #2-4, #3-4, and #4-4), and shows the discharge-capacity maintenance ratios with respect to the increase in the number of cycles;

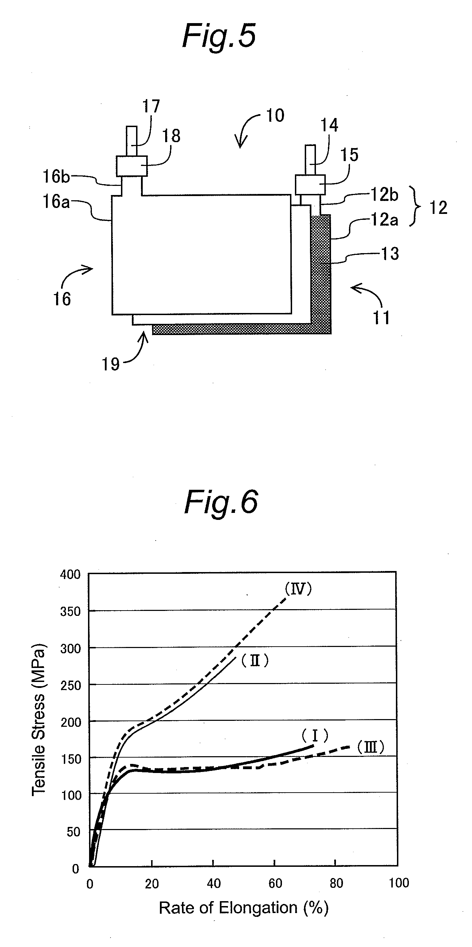

Fig. 5 is an explanatory diagram that shows a constitution of a stack of polar plates in a laminated cell; and
Fig. 6 illustrates a stress-strain curve of a polyimide-silica hybrid resin that was employed for a negativeelectrodefornon-aqueous-systemsecondarybattery according to the present invention, as well as those of polyimide-silica hybrid resins each of which has been heretofore used as a binding agent conventionally.

### MODE FOR CARRYING OUT THE INVENTION

Hereinafter, explanations will be made on some of the modes for performing the negative electrode for non-aqueous-system secondary battery according to the present invention, and for the manufacturing process for the same. Note that, unless otherwise specified, ranges of numeric values, namely, "from 'x' to 'y'" being set forth in the present description, involve the lower limit, "x," and the upper limit, "y," in those ranges. And, the other ranges of numeric values are composable by combining any two of those that include not only these upper-limit values and lower-limit values but also numeric values being listed in the following embodiments.

### (Negative Electrode for Non-aqueous-system Secondary Battery)

A negative electrode for non-aqueous-system secondary battery is equipped with a negative-electrode current collector, and a negative-electrode mixture-material layer comprising a negative-electrode mixture material that includes a negative-electrode active material and a binding agent, as well as an electrically-conductive assistant additive, if needed, and being formed on a surface of the negative-electrode current collector. The binding agent binds the negative-electrode active material, or binds the negative-electrode active material with the electrically-conductive assistant additive, and then retains them onto the negative-electrode current collector.

The negative-electrode active material includes silicon (Si). Specifically, it is allowable that the negative-electrode active material can comprise silicon and/or a silicon compound and can be used in a shape of powder. To be concrete, powders of the following can be given: an elementary substance of Si; oxides including Si; nitrides including Si; and alloys including Si; and the like. To be furthermore concrete, silicon oxide, silicon nitride, and so forth, can be given. Moreover, it is even permissible that the negative-electrode active material can include the other active materials that have been already known publicly. To be concrete, they can be graphite, Sn, Al, Ag, Zn, Ge, Cd, Pd, and so on. It is possible to use one member of these, or to mix two or more members of them to use. It is possible to produce these negative-electrode active materials using methods that have been known publicly in the relevant fields. It is preferable that an average particle diameter of the negative-electrode active material can be from 0.01 to 100 µm, and can furthermore be from 1 to 10 µm. Note that it is also allowable that the negative-electrode active material can be crystalline, or it is even permissible that it can be amorphous.

As for the electrically-conductive assistant additive, it is allowable to use a material that has been used commonly in the electrodes of non-aqueous-system secondary battery. For example, it is preferable to use an electrically conductive carbonaceous material, such as carbon blacks, acetylene blacks and carbon fibers. In addition to these carbonaceous materials, it is even permissible to use an electrically-conductive assistant additive that has been known already, such as electrically conductive organic compounds. It is allowable to use one member of these independently, or to mix two or more of them to use. It is preferable that a blending proportion of the electrically-conductive assistant additive can be the negative-electrode active material: the electrically-conductive assistant additive - from 1:0.01 to 1:0.3 by mass ratio, and can furthermore be from 1:0.05 to 1:0.08. Alternatively, it is preferable that the electrically-conductive assistant additive can be included in an amount of from 1 to 20% by mass, furthermore, in an amount of from 4 to 6% by mass, when a sum of the negative-electrode active material, the binding agent and electrically-conductive assistant additive is taken as 100% by mass. This is because it is not possible to form any favorable electrically-conductive networks when the electrically-conductive assistant additive is too less; moreover, that is because not only the formability of electrode gets worse but also an energy density of the resultant electrode becomes lower when the electrically-conductive assistant additive is too much.

The binding agent includes a polyimide-silicahybrid resin. A chemical formula of silane-modified polyamic acid, a precursor of the polyimide-silane hybrid resin, is shown below.

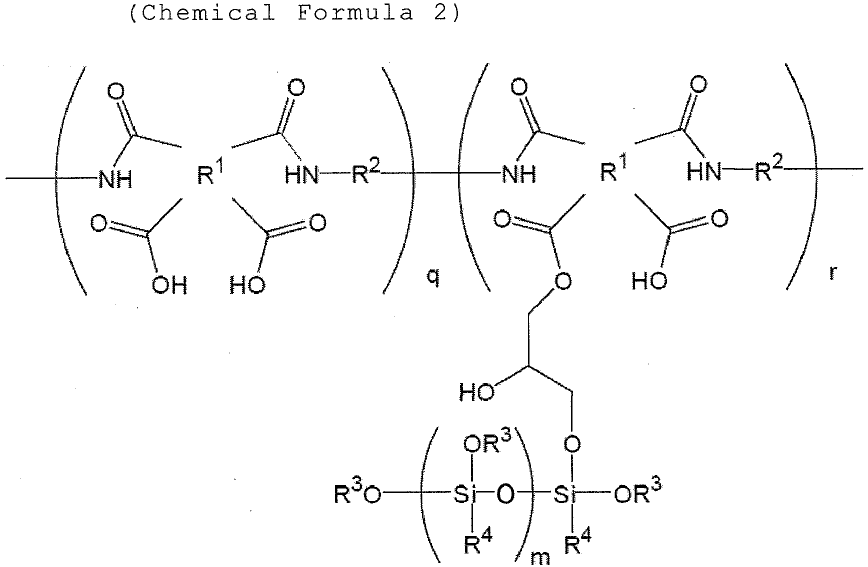

In the aforementioned chemical formula, "R¹, " "R², " "R³" and "R⁴" specify the following independently of one another: "R¹": an aromatic tetracarboxylic dianhydride residue including 3,3',4,4'-biphenyltetracarboxylic dianhydride residue in an amount of 90% by mole or more; "R²" : an aromatic diamine residue including 4,4'-diaminodiphenyl ether residue in an amount of 90% by mole more; "R³": an alkyl group whose number of carbon atoms is from 1 to 8; "R⁴": an alkyl group or alkoxy group whose number of carbon atoms is from 1 to 8; "q" is from 1 to 5, 000; "r" is from 1 to 1,000; and "m" is from 1 to 100.

The aforementioned silane-modified polyamic acid is obtainable by further reacting a silane-modified polyamic acid, which has been obtained by reacting a polyamic acid that is obtainable by reacting tetracarboxylic dianhydride and diamine with an epoxy group-containing alkoxysilane partial condensate, with tetracarboxylic dianhydride and diamine (that is, another polyamic acid).

Major constituent raw materials of polyamic acid are tetracarboxylic acids, and diamines. In the present invention, "R¹" (being taken as 100% by mole) is an aromatic tetracarboxylic dianhydride residue that includes 3,3', 4,4'-biphenyltetracarboxylic dianhydride residue in an amount of 90% by mole or more, 95% by mole or more, preferably, and 100% by mole, furthermore preferably. Specifically, as for the "R¹," in addition to 3,3', 4,4'-biphenyltetracarboxylic dianhydride, it can be parts being derived from aromatic tetracarboxylic acids that are exemplified by the following: pyromellitic anhydrides; 1,2,3,4-benzenetetracarboxylic anhydrides; 1,4,5,8-naphthalenetetracarboxylic anhydrides; 2,3,6,7-naphthalenetetracarboxylic anhydrides; 2,2',3,3'-biphenyltetracarboxylic dianhydride; 2,3,3',4'-biphenyltetracarboxylic dianhydride; 3,3',4,4'-benzophenonetetracarboxylic dianhydride; 2,3,3',4'-benzophenonetetracarboxylic dianhydride; 3,3',4,4'-diphenylethertetracarboxylic dianhydride; 2,3,3',4'-diphenylethertetracarboxylic dianhydride; 3,3',4,4'-diphenylsulfontetracarboxylic dianhydride; 2,3,3',4'-diphenylsulfontetracarboxylic dianhydride; 2,2-bis(3,3',4,4'-tetracarboxyphenyl) tetrafluoropropane dianhydride; 2,2'-bis(3,4-dicarboxyphenoxyphenyl) sulfone dianhydride; 2,2-bis(2,3-dicarboxyphenyl) propane dianhydride; 2,2-bis(3,4-dicarboxyphenyl) propane dianhydride; cyclopentanetetracarboxylic anhydrides; butane-1,2,3,4-tetracarboxylic acid; 2,3,5-tricarboxycyclopentylacetic anhydrides; and the like. Note that the "R¹" can also be one member of those above independently, or can even be one in which two or more members of them are combined.

Moreover, in the present invention, "R²" is an aromatic diamine residue that includes 4,4'-diaminodiphenyl ether residue in an amount of 90% by mole or more, 95% by mole or more, preferably, and 100% by mole, furthermore preferably. Specifically, as for the "R²," in addition to 4,4'-diaminodiphenyl ether, it can be parts being derived from aromatic diamines that are exemplified by the following: p-phenylenediamine; m-phenylenediamine; 3,3'-diaminodiphenyl ether; 3,4'-diaminodiphenyl ether; 3,3'-diaminodiphenyl sulfide; 3,4'-diaminodiphenyl sulfide; 4,4'-diaminodiphenyl sulfide; 3,3'-diaminodiphenyl sulfone; 3,4'-diaminodiphenyl sulfone; 4,4'-diaminodiphenyl sulfone; 3,3'-diaminobenzophenone; 4,4'-diaminobenzophenone; 3,4'-diaminobenzophenone; 3,3'-diaminodiphenylmethane; 4,4'-diaminodiphenylmethane; 3,4'-diaminodiphenylmethane; 2,2-di(3-aminophenyl)propane; 2,2-di(4-aminophenyl)propane; 2-(3-aminophenyl)-2-(4-aminophenyl)propane; 2,2-di(3-aminophenyl)-1,1,1,3,3,3-hexafluoropropane; 2,2-di(4-aminophenyl)-1,1,1,3,3,3-hexafluoropropane; 2-(3-aminophenyl)-2-(4-aminophenyl)-1,1,1,3,3,3-hexafluoropropane; 1,1-di(3-aminophenyl)-1-phenylethane; 1,1-di(4-aminophenyl)-1-phenylethane; 1-(3-aminophenyl)-1-(4-aminophnyl)-1-phenylethane; 1,3-bis(3-aminophenoxy)benzene; 1,3-bis(4-aminophenoxy)benzene; 1,4-bis(3-aminophenoxy)benzene; 1,4-bis(4-aminophenoxy)benzene; 1,3-bis(3-aminobenzoyl)benzene; 1,3-bis(4-aminobenzoyl)benzene; 1,4-bis(3-aminobenzoyl)benzene; 1,4-bis(4-aminobenzoyl)benzene; 1,3-bis(3-amino-α,α-dimethylbenzil)benzene; 1,3-bis(4-amino-α,α-dimethylbenzil)benzene; 1,4-bis(3-amino-α,α-dimethylbenzil)benzene; 1,4-bis(4-amino-α,α-dimethylbenzil)benzene; 1,3-bis(3-amino-α,α -ditrifluoromethylbenzil)benzene; 1,3-bis(4-amino-α,α -ditrifluoromethylbenzil)benzene; 1,4-bis(3-amino-α,α -ditrifluoromethylbenzil)benzene; 1,4-bis(4-amino-α,α -ditrifluoromethylbenzil)benzene; 2,6-bis(3-aminophenoxy)benzonitrile; 2,6-bis(3-aminophenoxy)pyridine; 4,4'-bis(3-aminophenoxy)biphenyl; 4,4'-bis(4-aminophenoxy)biphenyl; bis[4-(3-aminophenoxy)phenyl]ketone; bis[4-(4-aminophenoxy)phenyl]ketone; bis[4-(3-aminophenoxy)phenyl]sulfide; bis[4-(4-aminophenoxy)phenyl]sulfide; bis[4-(3-aminophenoxy)phenyl]sulfone; bis[4-(4-aminophenoxy)phenyl]sulfone; bis[4-(3-aminophenoxy)phenyl]ether; bis[4-(4-aminophenoxy)phenyl]ether; 2,2-bis[4-(3-aminophenoxy)phenyl]propane; 2,2-bis[4-(4-aminophenoxy)phenyl]propane; 2,2-bis[3-(3-aminophenoxy)phenyl]-1,1,1,3,3,3-hexafluoropropane; 2,2-bis[4-(4-aminophenoxy)phenyl]-1,1,1,3,3,3-hexafluoropropane; 1,3-bis[4-(3-aminophenoxy)benzoyl]benzene; 1,3-bis[4-(4-aminophenoxy)benzoyl]benzene; 1,4-bis[4-(3-aminophenoxy)benzoyl]benzene; 1,4-bis[4-(4-aminophenoxy)benzoyl]benzene; 1,3-bis[4-(3-aminophenoxy)-α,α -dimethylbenzil] benzene; 1,3-bis[4-(4-aminophenoxy)-α,α -dimethylbenzil] benzene; 1,4-bis[4-(3-aminophenoxy)-α,α -dimethylbenzil] benzene; 1,4-bis[4-(4-aminophenoxy)-α,α -dimethylbenzil] benzene; 4,4'-bis[4-(4-aminophenoxy)-benzoyl]diphenylether; 4,4'-bis[4-(4-amino-α,α-dimethylbenzil)phenoxy]benzophenone; 4,4'-bis[4-(4-amino-α, α-dimethylbenzil)phenoxy]diphenylsulfone; 4,4'-bis[4-(4-aminophenoxy)phenoxy]diphenylsulfone; 3,3'-diamino-4,4'-diphenoxybenzophenone; 3,3'-diamino-4,4'-dibiphenoxybenzophenone; 3,3'-diamino-4-phenoxybenzophenone; 3,3'-diamino-4-biphenoxybenzophenone; and the like. Note that the "R²" can also be one member of those above independently, or can even be one in which two or more members of them are combined.

The "R³" can be an alkyl group whose number of carbon atoms is from 1 to 8, and the "R⁴" can be an alkoxy group or alkyl group whose number of carbon atoms is from 1 to 8. The "m" is from 1 to 100, and can preferably be from 1 to 5. Note that the "R¹" through "R⁴" being explained above are those each of which is independent even in any one of the chemical formulas herein, and which specify the above-listed constituents, respectively.

As describedabove, a silane-modifiedpolyamic resin is obtainable by reacting a polyamic acid with an epoxy group-containing alkoxysilane partial condensate. Although an employed proportion between the polyamic acid and the epoxy group-containing alkoxysilane partial condensate is not limited especially, the "q" is from 1 to 5,000, and can preferably be from 1 to 2,500, whereas the "r" is from 1 to 1,000, and can preferably be from 1 to 100. Moreover, it is preferable to set a value, (Equivalent of Epoxy Groups in Epoxy Group-containing Alkoxysilane Partial Condensate)/(Equivalent of Carboxylic Groups in Tetracarboxylic Acids Employed for Polyamic Acid), so as to fall in a range of from 0.01 to 0.4 approximately. This is preferable because the transparency of resultant coated films becomes favorable by setting the aforementioned numeric value so as to be from 0.01 or more to 0.4 or less. Note that, in the case of employing polyamic acids in which a sum of the "q" and "r" is 50 or more, care should be taken because there might possibly arise cases where the reaction between the epoxy groups and the carboxylic groups results in gelation when the aforementioned value is 0.3 or more.

Asilane-modified polyamicacid,whichisespecially suitable for the present invention, can have the "R¹" that is 3,3',4,4'-biphenyltetracarboxylic dianhydride residue, the "R²" that is 4,4'-diaminodiphenyl ether residue, the "R³" that is a methyl group, the "R⁴" that is a methoxy group, the "q" that is from 1 to 2,500, the "r" that is from 1 to 100, and the "m" that is from 1 to 5, in the said formula.

A silane-modified polyamic acid turns into a cured substance of polyimide-silica hybrid resin when being subjected to sol-gel curing and dehydration ring-closing. This cured substance includes gelated fine silica (SiO₂ and polyimide that results from the ring-closing reaction from amide acid group to imide group. Note that the silica has structures, which are derived from the "R³" and "R⁴," on the surface, and the parts of silica and the parts of polyimide are in a bonded state. On this occasion, in the polyimide-silica hybrid resin, amide acid groups in the silane-modified polyamic acid can be imidized in an amount (i.e., a degree of imidization) of 90% by mole or more; in an amount of 95% by mole or more, preferably, and in an amount of 100% by mole, furthermore preferably, when the amide acid groups in the silane-modified polyamic acid are taken as 100% by mole. It is feasible to control the degree of imidization by means of heating temperature and heating time being described later in detail. It is feasible to measure the degree of imidization by means of publicly known methods, like the nuclear magnetic resonance spectroscopic methods, for instance. The polyimide-silica hybrid resin is less likely to dissolve into non-aqueous electrolytic solutions or swell in them.

Note that the aforementioned polyimide-silica hybrid resin has such a characteristic that the fracture elongation is high. When the fracture elongation" should be prescribed, it is preferable that a fracture elongation, which is measured by the method that is provided in JIS K7127, can be 50% or more, furthermore, from 50 to 150%.

Moreover, the binding agent can also include other resins along with the polyimide-silica hybrid resin. As for the other resins, the following can be given: polyimide resins; polyamide resins; polyamide-imide resins; epoxy resins; acrylic resins; phenolic resins; polyurethane resins; polyvinylidene fluoride; styrene-butadiene rubbers; carboxymethylcellulose; and the like. It is possible to employ one or more members of those above.

For the negative-electrode current collector, it is possible to use meshes being made of metal, or metallic foils. As for the current collector, porous or nonporous electrically conductive substrates can be given, porous or nonporous electrically conductive substrates which comprise: metallic materials, such as stainless steels, titanium, nickel, aluminum and copper; or electrically conductive resins. As for the porous electrically conductive substrates, the following can be given: meshed bodies, netted bodies, punched sheets, lathed bodies, porous bodies, foamed bodies, formed bodies of fibrous assemblies like woven fabrics, and the like, for instance. As for the nonporous electrically conductive substrates, the following can be given: foils, sheets, films, and so forth, for instance.

In the negative electrode for non-aqueous-system secondary battery according to the present invention, it is not necessary to make the surface roughness of the current collector larger. The surface roughness is 4.5 µm or less, or 4 µm or less, or furthermore from 1.5 to 3 µm or less, by ten-point average roughness Rz (JIS). In the case where it is the aforementioned binding agent, it is endurable against the load of repetitive stresses that arise from the expansion and contraction of silicon-system active material, even when the surface roughness is 4.5 µ m or less. However, even when using a current collector possessing a surface roughness that exceeds 4.5 µm, it does not deteriorate the durability at all. As a metallic material possessing such an extent of surface roughness, electrodeposited metallic foils or rolled metallic foils that have not been undergone any surface roughening treatment. It is common that the surface roughness of these is from 0.5 to 3 µm by Rz. Note that the "ten-point surface roughness" is provided in Japanese Industrial Standard (e.g., JIS B0601-1994), and can be measured by means of surface roughness meters, and the like.

### (Manufacturing Process for Negative Electrode for Non-aqueous-system Secondary Battery)

The aforementioned negative electrode for non-aqueous-system secondary battery is makable via the following steps being explained below: a preparation step of preparing composition for forming negative-electrode mixture-material layer; a formation step of forming negative-electrode mixture-material layer; and a heating step.

The preparation step of preparing composition for forming negative-electrode mixture-material layer is a step in which a composition for forming negative-electrode mixture-material layer is prepared, composition which includes a negative-electrode active material including Si and a binding-agent raw-material solution including a silane-modified polyamic acid. Note that, at this step, it is allowable to further mix an electrically-conductive assistant additive with the above. Regarding the negative-electrode active material and silane-modified polyamic acid, they can be those as having been explained already. Prior to mixing them with a binding agent, it is permissible to classify (or sieve) the negative-electrode active material at least to 100 µm or less, furthermore, to 10 µm or less.

A raw material for the binding agent, such as the silane-modified polyamic acid, is mixed with the negative-electrode active material, and the like, in such a state as being powdery or a solution (or dispersion liquid) in which it is dissolved (or dispersed) in an organic solvent. Note that, even being a powder-like binding agent, a paste-like composition for forming negative-electrode mixture-material layer that is likely to be provided to a current collector is obtainable by adding an organic solvent to that powder. As for an employable organic solvent, the following can be given: N-methyl-2-pyrrolidone (or NMP), methanol, methyl isobutyl ketone (MIBK), and so forth.

Note that it is desirable to select a blending proportion of the organic solvent so that an obtainable composition for forming negative-electrode mixture-material layer comes to exhibit a density that is suitable for it to be provided to a current collector at the ensuing formation step of forming negative-electrode mixture-material layer; to be concrete, to exhibit from 1,000 to 9,000 mPa·s, that is, values being obtained by means of a rotator (e.g., type "B") viscometer at room temperature (i.e., 25 °C).

Upon mixing the negative-electrode active material with the binding-agent raw-material solution, it is allowable to employ a general mixing apparatus, such as planetary mixers, defoaming kneaders, ball mills, paint shakers, vibrational mills, Raikai mixers (or attritors) and agitator mills.

The formation step of forming negative-electrode mixture-material layer is a step in which a composition having been prepared at the preparation step of preparing composition for forming negative-electrode mixture-material layer is provided to a current collector. It is common that a negative electrode for non-aqueous-system secondary battery is completed by adhering an active-material layer, which is completed by binding a negative-electrode active material at least with a binding agent, onto a current collector. Consequently, an obtained negative-electrode mixture material can be coated onto a surface of the current collector. As for the coating method, it is allowable to use a method, such as doctor blade or bar coater, which has been heretofore known publicly. It is permissible to form the negative-electrode mixture-material layer on a negative-electrode current collector's surface in such a thickness as from 10 to 300 µm approximately.

The heating step is a step in which the negative-electrode mixture-material layer is heated in order to have the silane-modified polyamic acid undergo sol-gel curing and dehydration ring-closing. By means of the heating, the silane-modified polyamic acid is cured to a polyimide-silica hybrid resin. Although a temperature of the heating, and a time therefor depend on the negative-electrode mixture-material layer's thickness, it is turned into imide by 100% virtually by heating it at 350-430 °C for 1-2 hours. Although it is also allowable to carry out the heating in air or it is even permissible to carry it out in a vacuum or in an inert-gas atmosphere, it is preferable to carry it out in a vacuum, or in an inert-gas atmosphere. In the present description, the temperature of the heating is an atmospheric temperature of the heating. Note that, as for a yardstick for the heating conditions for 90%-by-mole imidization degree, they are set at 300 °C for 1 hour approximately.

Inaddition, it is also allowable to form the negative electrode so that it comes to have a desirable thickness or density by means of a publicly know method, such as roll pressing or pressurized pressing. The negative electrode to be obtained has a sheet shape, and is used after being cut to dimensions that conform to specifications of non-aqueous-system secondary batteries to be made.

### (Non-aqueous-system Secondary Battery)

A non-aqueous-system secondary battery is constituted of a positive electrode, the aforementioned negative electrode for non-aqueous-system secondary battery, and a non-aqueous electrolytic solution in which an electrolytic material is dissolved in an organic solvent. In addition to the positive electrode and negative electrode, this non-aqueous-system secondary battery is equipped with a separator, which is held between the positive electrode and the negative electrode, and the non-aqueous electrolytic solution, in the same manner as common secondary batteries.

The separator is one which separates the positive electrode from the negative electrode, and which retains the non-aqueous electrolytic solution. It is possible to use a thin micro-porous membrane, such as polyethylene or polypropylene, therefor.

The non-aqueous electrolytic solution is one in which an alkali metal salt, one of electrolytes, is dissolved in an organic solvent. There are not any limitations especially on the types of non-aqueous electrolytic solutions to be employed in non-aqueous-system secondary batteries that are equipped with the aforementioned negative electrode for non-aqueous-system secondary battery. As for the non-aqueous electrolytic solution, it is possible to use one or more members being selected from the group consisting of non-protonic organic solvents, such as propylene carbonate (or PC), ethylene carbonate (or EC), dimethyl carbonate (or DMC), diethyl carbonate (or DEC) and ethyl methyl carbonate (or EMC), for instance. Moreover, as for the electrolyte to be dissolved, it is possible to use alkali metal salts, such as LiPF₆, LiBF₄, LiAsF₆, LiI, LiClO₄, NaPF₆, NaBF₄, NaAsF₆ and LiBOB, which are soluble in organic solvents.

The negative electrode is one which has been explained already. The positive electrode includes a positive-electrode active material into which alkali metal ions can be inserted and from which they can be eliminated, and a binding agent that binds the positive-electrode active material. It is also allowable that it can further include an electrically-conductive assistant additive. The positive-electrode active material, the electrically-conductive assistant additive, and the binding agent are not limited especially, and so it is permissible that they can be those which are employable in non-aqueous-system secondary batteries. To be concrete, as for the positive electrode active material, the following can be given: LiCoO₂, LiNi_{1/3}Co_{1/3}Mn_{1/3}O₂, Li₂MnO₂, S, and the like. Moreover, it is allowable that a current collector can be those which are employed commonly for positive electrodes for non-aqueous-system secondary batteries, such as aluminum, nickel and stainless steels.

There are not any limitations on a configuration of the non-aqueous-system secondary battery, and hence it is possible to employ a variety of configurations, such as cylindrical types, laminated types and coin types. Even in a case where any one of the configurations is adopted, a battery is made as follows: the separators are interposed between the positive electrodes and the negative electrodes, thereby making electrode assemblies; and then these electrode assemblies are sealed in a battery case along with the non-aqueous electrolytic solution after connecting intervals to and from the positive-electrode terminals and negative-electrode terminals, which lead to the outside from the resulting positive-electrode current-collector assemblies and negative-electrode current-collector assemblies, with use of leads for collecting electricity, and the like.

So far, the embodiment modes of the negative electrode for non-aqueous-system secondary battery according to the present invention, and those of the manufacturing process for the same have been explained. However, the present invention is not one which is limited to the aforementioned embodiment modes. It is possible to execute the present invention in various modes, to which changes or modifications that one of ordinary skill in the art can carry out are made, within a range not departing from the gist.

### EMBODIMENTS

Hereinafter, the present invention will be explained in detail while giving specific embodiments of the negative electrode for non-aqueous-system secondary battery according to the present invention, and those of the manufacturing process for the same.

### (Making of Negative Electrodes for Lithium-ion Secondary Battery)

As a negative-electrode active material, and as an electrical-conductive assistant additive, the following were made ready, respectively: a commercially available Si powder with a purity of 99.9% or more (produced by FUKUDA METAL FOIL & POWDER Co., Ltd., and having particle diameters of 10 µm or less); and KETJENBLACK (e.g., "KB" having an average particle diameter of from 30 to 50 nm) were made ready. Moreover, as raw materials for binding agent for binding these negative-electrode active material and electrical-conductive assistant additive, the following were made ready: two kinds of silane-modified polyamic acids (e.g., (I) high fracture-elongation type, and (II) high fracture-strength type), according to the invention ; and two kinds of polyamic acids (e.g., (III) high fracture-elongation type, and (IV) high fracture-strength type), serving as reference examples (not part of the invention).

The silane-modified polyamic acids (I) and (II) according to the invention were expressed by the aforementioned formula having been described already. The "R¹" through "R⁴, " "q," "r" and "m" were as follows.

(I) The "R¹," "R²," "R³," and "R⁴" were 3,3',4,4'-biphenyltetracarboxylic dianhydride residue, 4,4'-diaminodiphenyl ether residue, a methyl group, and a methoxy group, respectively. The "q," "r," and "m" were from 1 to 2, 500, from 1 to 100, and from 1 to 5, respectively.

(II) The "R¹," "R²," "R³," and "R⁴" were 3,3',4,4'-biphenyltetracarboxylic dianhydride residue (95%bymole) and pyromellitic anhydride residue (5% by mole) ; p-phenylenediamine residue (75% by mole) and 4,4' -diaminodiphenyl ether residue (25% by mole) ; a methyl group; and a methoxy group, respectively. The "q," "r," and "m" were from 1 to 2,500, from 1 to 100, and from 1 to 5, respectively.

The polyamic acids (III) and (IV), reference examples, which are not part of the invention, were expressed by an undermentioned formula. The "R⁶," "R⁷," and "n" were as follows.

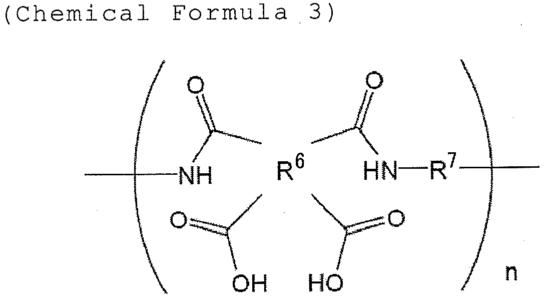

(III) The "R⁶," R⁷," and "n" were 3,3',4,4'-biphenyltetracarboxylic dianhydride residue, 4,4'-diaminodiphenyl ether residue, and from 100 to 300, respectively.

(IV) The "R⁶," R⁷," and "n" were 3,3',4,4'-biphenyltetracarboxylic dianhydride residue (95% by mole)and pyromellitic anhydride residue (5% by mole); p-phenylenediamine residue (75% by mole) and 4, 4' -diaminodiphenyl ether residue (25% by mole); and from 100 to 300, respectively.

Moreover, stress-strain curves (or "SS" curves) are illustrated in Fig. 6, "SS" curves which were obtained by making test specimens, in which aforementioned (I) through (IV) were cured completely, and then subjecting them to a measurement. Note that the "SS" curves shown in Fig. 6 were measured by means of the method provided in JIS K7127. Since the resins labeled (III) and (IV), which are not part of the invention, were polyimide resins that did not include any silica, their fracture elongations exceeded 60%. On the other hand, in the resins according to the invention labeled (I) and (II), their fracture elongations declined due to the existence of silica. Even so, it was understood that the resin labeled (I) can keep exhibiting a fracture elongation of 70% approximately. That is, it was understood that the resulting "SS" curves differ greatly due to the structural differences of segments comprising polyamic acid. Note that a polyimide-silica hybrid resin, which is obtainable from a silane-modified polyamic acid according to (Chemical Formula 1) wherein: "R¹" specifies an aromatic tetracarboxylic dianhydride residue including 3,3',4,4'-biphenyltetracarboxylic dianhydride residue in an amount of 90% by mole or more; "R²" specifies an aromatic diamine residue including a 4,4'-diaminodiphenyl ether residue in an amount of 90% by mole or more; "R³" specifies an alkyl group whose number of carbon atoms is from 1 to 8; "R⁴" specifies an alkyl group or an alkoxy group whose number of carbon atoms is from 1 to 8 independently of one another; "q" is from 1 to 5,000; "r" is from 1 to 1,000; and "m" is from 1 to 100, possesses an "SS" curve that is similar to the one being labeled (I) in Fig. 6.

The Si powder, the silane-modified polyamic acid or polyamic acid, and KETJENBLACK were mixed in a solid-content blending amount (coinciding with the composition of a negative electrode to be made virtually), respectively, so that they made a ratio, Si Powder: Binder Resin: "KB" = 80:15:5 (mass ratio). In addition, NMP was added in order that the resulting viscosity became one which made them easier to be coated onto current collector, thereby obtaining four kinds of paste-like compositions for forming negative-electrode mixture-material layer.

For the negative-electrode current collector, four kinds of the following given below were made ready:
(i) a rolled copper foil produced by FUKUDA METAL FOIL AND POWDER Co., Ltd., and having 15-µm thickness and 1.66-µm Rz;
(ii) an electrodeposited copper foil produced by FURUKAWA DENKO Co., Ltd. , and having 18 -µm thickness and 1.68-µm Rz;
(iii) an electrodeposited copper foil produced by FURUKAWA DENKO Co., Ltd., and having 18 - µm thickness and 2.7-µm Rz; and
(iv) an electrodeposited copper foil produced by FUKUDA METAL FOIL AND POWDER Co., Ltd., and having 18-µm thickness and 5-µm Rz.

After coating each of the aforementioned compositions onto the surface of the respective current collectors so as to be a thickness of 10 µm approximately and then drying them in order to evaporate the organic solvent, each of the current collectors was pressed and then punched out to a predetermined configuration. Thereafter, they were heated to 350 °C for 1 hour approximately in a vacuum furnace, thereby obtaining 16 kinds of negative electrodes given in Table 1 below.

**(TABLE 1)**

| | | Current Collector | | | |
|---|---|---|---|---|---|
| | | (i) | (ii) | (iii) | (iv) Reference |
| | | 1.66-*µ*m Rz | 1.68-*µ*m Rz | 2.7-*µ*m Rz | 5-*µ*m Rz |
| Binding Agent | (I) High Fracture-elongation Type Polyimide-silica Hybrid Resin | 1-1 | 1-2 | 1-3 | 1-4 |
| | (II) High Fracture-strength Type Polyimide-silica Hybrid Resin | 2-1 | 2-2 | 2-3 | 2-4 |
| | (III) High Fracture-elongation Type Polyimide Resin | 3-1 | 3-2 | 3-3 | 3-4 |
| | (IV) High Fracture-strength Type Polyimide Resin | 4-1 | 4-2 | 4-3 | 4-4 |

### The constitution of the negative electrode being obtained will be explained using Fig. 5. Fig. 5 is an explanatory diagram that shows the constitution of a stack of polar plates in a laminated cell being explained in detail later, and the negative electrode being made in accordance with the aforementioned procedure corresponds to the electrode 11 in Fig. 5. The electrode 11 comprises a sheet-shaped current-collector foil 12 being composed of a copper foil, and a negative-electrode active-material layer 13 being formed on a surface of the current-collector foil 12. The current-collector foil 12 is provided with a rectangle-shaped mixture-material-applied portion 12a (26 mm X 31 mm), and a tab-welded potion 12b extending out from a corner of the mixture-material-applied portion 12a. On one of the faces of the mixture-material-applied potion 12a, the negative-electrode active-material layer 13 is formed. As described above, the negative-electrode active-material layer 13 includes the Si powder, the electrically-conductive assistant additive, and the binding agent for binding both of the two.

To the tab-welded portion 12b of the current-collector foil 12, a tab 14 being made of nickel was resistance welded. In addition, around the tab-welded portion 12b, a resinous film 15 was wrapped.

### (Making of Lithium-ion Secondary Battery)

A laminated cell was made using a positive electrode, which included LiCoO₂ as the positive-electrode active material, as a counter electrode against the negative electrode, which was obtained by the aforementioned procedure. The laminated battery was provided with the following: a stack 10 of polar plates, which were made by laminating an electrode 11 (i.e., either one of those mentioned above), a counter electrode 16 and a separator 19; a laminated film (not shown), which wrapped around the stack 10 of polar plates to encapsulate it; and a non-aqueous electrolytic solution to be injected into the laminated film. A procedure of making a laminated cell will be explained using Fig. 5.

The electrode 11 was constituted as having been explained already. For the counter electrode 16, a positive electrode including LiCoO₂ (produced by PIOTREK Co., Ltd.) was used. In this positive electrode, an aluminum foil having 15 µm in thickness was used as the current collector, the capacity was 2.2 mAh/cm², and the electrode density was 2.8 g/cm². The counter electrode 16 was constituted as follows: it was provided with a rectangle-shaped mixture-material-applied portion 16a (25 mm X 30 mm), and a tab-welded potion 16b extending out from a corner of the main-body portion 16a in the same manner as the electrode 11; and all of the above were composed of an aluminum foil. On one of the faces of the mixture-material-applied potion 16a, a positive-electrode active-material layer including LiCoO₂ was formed. To the tab-welded portion 16b, a tab 17 made of aluminum was resistance welded. In addition, around the tab-welded portion 16b, a resinous film 18 was wrapped.

For the separator 19, a rectangle-shaped sheet (27 mm X 32 mm, and 25 µm in thickness) being composed of a polypropylene resin was used. The mixture-material-applied portion 12a of the electrode 11, the separator 19, and the mixture-material-applied portion 16a of the counter electrode 16 were laminated in this order so that the negative-electrode active-material layer and the positive-electrode active-material layer faced to each other by way of the separator 19, thereby constituting the stack 10 of polar plates.

The non-aqueous electrolytic solution was obtained by dissolving LiPF₆ in a concentration of 1 mole into a mixed solvent, in which ethylene carbonate (or EC) and diethyl carbonate (or DEC) were mixed in a ratio of EC:DEC = 1:1 (by volume ratio). Next, after covering the stack 10 of polar plates with two pieces of laminated films making a set and then sealing them at the three sides, the non-aqueous electrolytic solution was injected into the laminated films that were turned into a bag shape. Thereafter, the remaining other sides were sealed, thereby obtaining a laminated cell whose four sides were sealed airtightly, and in which the stack 10 of polar plates and the non-aqueous electrolytic solution were encapsulated. Note that a part of the tabs 14 and 17 of the both electrodes projected outward in order for the electric connection with the outside.

### (Charging/discharging Test for Evaluation on Durability)

With regard to the laminated cells being made by the aforementioned procedure, a charging/discharging test was carried out at room temperature (e.g., 30 °C). In the charging/discharging test, a CCCV charging (i.e., constant-current and constant-voltage charging) operation was carried out at 1C up to 4.2 V for 2.5 hours; and then a CC discharging (i.e., constant-current discharging) operation was carried out at 1C down to 3 V; and these were taken as one cycle and were repeated 80 cycles. The current was set at a constant current of 16.5 mA. And, discharging capacities during the respective cycles were calculated, and were designated as "discharging-capacity maintenance ratios (%) when the discharging capacity at the first cycle was taken as 100," respectively. The results are illustrated in Figs. 1 through 4.

Any of #1-1 through #1-3 and reference #1-4, and #2-1 through #2-3 and reference #2-4 employed one of the polyimide-silica hybrid resins as the binding agent, respectively. The batteries using the negative electrodes according #1-1 through #1-3 and reference #1-4 that employed the high fracture-elongation type polyimide-silica hybrid resin (I) were better in the cyclic longevity than were the batteries using the negative electrodes according #2-1 through #2-3 and reference #2-4 that employed the high fracture-strength type polyimide-silica hybrid resin (II), even when they were compared with each other for the current collectors with any surface roughness.

Note that the high fracture-strength type polyimide resin (IV), not part of the invention, showed a fracture elongation that was equivalent to that of the high fracture-elongation type polyimide-silica hybrid resin (I) (see Fig. 6). However, even when observing any one of the results on #4-1 through #4-4, the discharging-capacity maintenance ratios fell below 30% after the 80th cycle.

Moreover, any of #1-1 through #1-3 and reference #1-4, and #3-1 through #3-4 employed one of the high fracture-elongation type resins as the binding agent, respectively. When being compared with the batteries using the negative electrodes according to #3-1 through #3-4 that employed polyimide resin (III) that does not form part of this invention, the batteries using the negative electrodes according to #1-1 through #1-3 and reference #1-4 that employed polyimide-silica hybrid resin (I) showed cyclic longevities that were substantially equal to or more than those of the former batteries. Although any of the battery using the negative electrode according to reference #1-4, and the battery using the negative electrode according to #3-4 employed the current collector whose surface roughness was 5 µm Rz, they showed comparable discharging-capacity maintenance ratios during the 70th through the 80th cycles. However, when comparing the discharging-capacity maintenance ratios during the 70th through the 80th cycles with each other, the battery using the negative electrode according to #3-4 that possessed the current collector whose Rz was larger was superior to the batteries using the negative electrodes according to #3-1 through #3-3 that possessed the current collectors whose Rz was smaller. In other words, although the more the surface of a current collector is roughened the higher the durability can be when using the high fracture-elongation type polyimide resin (III) that does not form part of this invention, the durability of a current collector is maintained without ever roughening the surface when using the high fracture-elongation type polyimide-silica hybrid resin (I). Consequently, even if a copper foil whose surface roughness differs between the front face and the back face should be used as a current collector, it is possible to make the durability equivalent to one another on both faces of the resulting electrode when including the high fracture-elongation type polyimide-silica hybrid resin (I).

## Claims

1. A negative electrode for non-aqueous-system secondary battery wherein the negative electrode
is equipped with a negative-electrode current collector, and a negative-electrode mixture-material layer comprising a negative-electrode mixture material that includes a negative-electrode active material containing silicon (Si) and a binding agent at least, the negative-electrode mixture-material layer being formed on a surface of the negative-electrode current collector; and **characterized in that**
said binding agent includes a polyimide-silica hybrid resin being made by subjecting a silane-modified polyamic acid to sol-gel curing and dehydration ring-closing, the silane-modified polyamic acid being expressed by the following formula (wherein: "R¹" specifies an aromatic tetracarboxylic dianhydride residue including 3,3',4,4'-biphenyltetracarboxylic dianhydride residue in an amount of 90% by mole or more; "R²" specifies an aromatic diamine residue including a 4,4'-diaminodiphenyl ether residue in an amount of 90% by mole or more; "R³" specifies an alkyl group whose number of carbon atoms is from 1 to 8; "R⁴" specifies an alkyl group or an alkoxy group whose number of carbon atoms is from 1 to 8 independently of one another; "q" is from 1 to 5,000; "r" is from 1 to 1,000; and "m" is from 1 to 100): 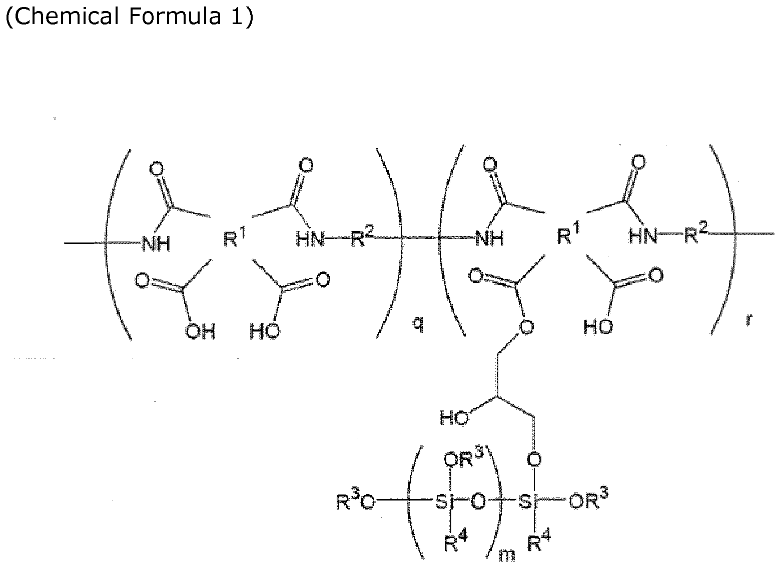 wherein a surface roughness of said negative-electrode current collector is 4.5 µm or less by ten-point average roughness (or Rz).

2. The negative electrode for non-aqueous-system secondary battery as set forth in claim 1, wherein the surface roughness of said negative-electrode current collector is from 1.5 to 3 µm by ten-point average roughness (or Rz).

3. The negative electrode for non-aqueous-system secondary battery as set forth in claim 1, wherein said negative -electrode current collector is an electrode posited metallic foil or rolled metallic foil that is not subjected to any surface roughening treatment.

4. The negative electrode for non-aqueous-system secondary battery as set forth in claim 1, wherein said polyimide-silica hybrid resin exhibits a rate of elongation of 50% or more at fracture.

5. The negative electrode for non-aqueous-system secondary battery as set forth in claim 1, wherein:
the "R¹" is 3,3',4,4'-biphenyltetracarboxylic dianhydride residue;
the "R²" is 4,4'-diaminodiphenyl ether residue;
the "R³" is a methyl group;
the "R⁴" is a methoxy group;
the "q" is from 1 to 2,500;
the "r" is from 1 to 100; and
the "m" is from 1 to 5; in said formula.

6. The negative electrode for non-aqueous-system secondary battery as set forth in claim 1, wherein 90% by mole or more of amide acid groups in said silane-modified polyamic acid are imidized to make said binding agent.

7. A manufacturing process for negative electrode for non-aqueous-system secondary battery being **characterized in that** a negative electrode including a polyimide-silica hybrid resin that serves as a binding agent is obtained via the following:
a preparation step of preparing composition for forming negative-electrode mixture-material layer, wherein a composition for forming negative-electrode mixture-material layer is prepared, the composition including a negative-electrode active material, which includes silicon (Si), and a binding-agent raw-material solution, which includes a silane-modified polyamic acid that is expressed by the following formula (wherein: "R¹" specifies an aromatic tetracarboxylic dianhydride residue including 3,3',4,4'-biphenyltetracarboxylic dianhydride residue in an amount of 90% by mole or more; "R²" specifies an aromatic diamine residue including a 4, 4' - diaminodiphenyl ether residue in an amount of 90% by mole or more; "R³" specifies an alkyl group whose number of carbon atoms is from 1 to 8; "R⁴" specifies an alkyl group or an alkoxy group whose number of carbon atoms is from 1 to 8 independently of one another; "q" is from 1 to 5,000; "r" is from 1 to 1,000; and "m" is from 1 to 100);
a formation step of forming negative-electrode mixture-material layer, wherein said composition is provided to a current collector, wherein a surface roughness of said negative-electrode current collector is 4.5 µm or less by ten-point average roughness (or Rz), in order to form a negative-electrode mixture-material layer; and
a heating step of heating said negative-electrode mixture-material layer in order to have said silane-modified polyamic acid undergo sol-gel curing and dehydration ring-closing.

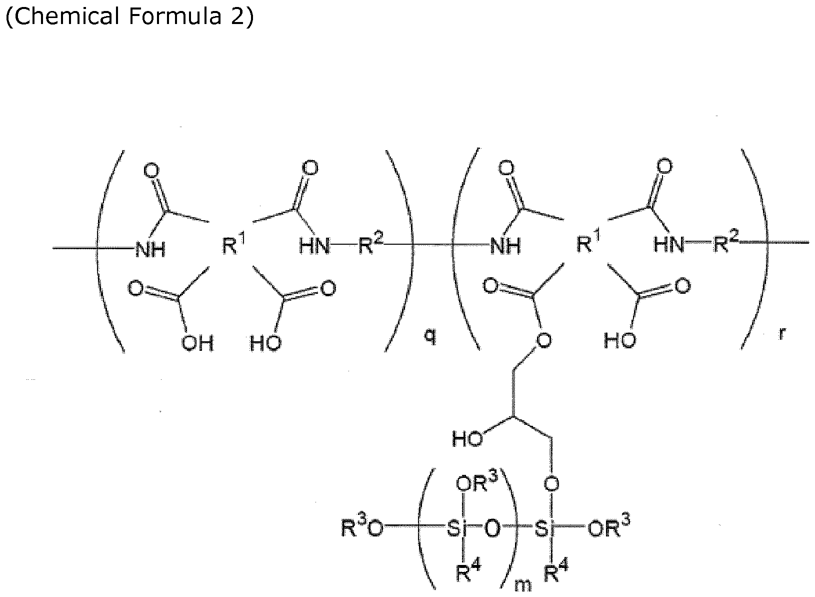

8. The manufacturing process for negative electrode for non-aqueous-system secondary battery as set forth in claim 7, wherein said heating step is a step of carrying out the heating at 350-430 °C for 1-2 hours.

## Patentansprüche

1. Negative Elektrode für eine nicht-wässriges-System Sekundärbatterie, wobei die negative Elektrode mit einem Negativelektrodenstrom-abnehmer und einer Negativelektrodenmischungsmaterialschicht ausgestattet ist, die ein Negativelektrodenmischungsmaterial umfasst, das zumindest ein Silicium (Si) enthaltendes Negativelektrodenaktivmaterial und ein Bindemittel beinhaltet, wobei die Negativelektrodenmischungsmaterialschicht auf einer Oberfläche des Negativelektroden-stromabnehmers gebildet ist; und die **dadurch gekennzeichnet ist, dass**
das Bindemittel ein Polyimid-Siliciumoxid-Hybridharz beinhaltet, das hergestellt wurde durch Unterwerfen einer Silan-modifizierten Polyamidsäure eines Sol-Gel-Härtens und eines dehydrierenden Ringschlusses, wobei die Silan-modifizierte Polyamidsäure durch die folgende Formel ausgedrückt wird (wobei: "R¹" einen aromatischen Tetracarboxyldianhydridrest spezifiziert, der einen 3,3',4,4'-Biphenyltetracarboxyldianhydridrest in einer Menge von 90 Mol-% oder mehr beinhaltet; "R²" einen aromatischen Diaminrest spezifiziert, der einen 4,4'-Diaminodiphenyletherrest in einer Menge von 90 Mol-% oder mehr beinhaltet; "R³" eine Alkylgruppe spezifiziert, deren Anzahl an Kohlenstoffatomen von 1 bis 8 ist; "R⁴" eine Alkylgruppe oder eine Alkoxygruppe spezifiziert, deren Anzahl an Kohlenstoffatomen unabhängig voneinander von 1 bis 8 ist; "q" von 1 bis 5000 ist; "r" von 1 bis 1000 ist; und "m" von 1 bis 100 ist): 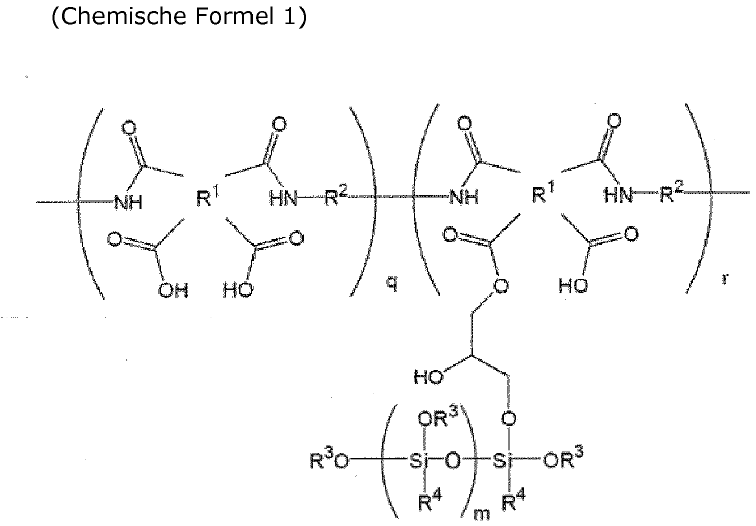 wobei eine Oberflächenrauheit des Negativelektrodenstromabnehmers 4,5 µm oder weniger mittels einer Zehn-Punkt mittleren Rauheit (oder Rz) ist.

2. Negative Elektrode für eine nicht-wässriges-System Sekundärbatterie nach Anspruch 1, wobei die Oberflächenrauheit des Negativelektrodenstromabnehmers von 1,5 bis 3 µm mittels einer Zehn-Punkt mittleren Rauheit (oder Rz) ist.

3. Negative Elektrode für eine nicht-wässriges-System Sekundärbatterie nach Anspruch 1, wobei der Negativelektrodenstromabnehmer eine Elektroden-postulierte Metallfolie oder eine gewalzte Metallfolie ist, die keiner Oberflächenbehandlung unterzogen wurde.

4. Negative Elektrode für eine nicht-wässriges-System Sekundärbatterie nach Anspruch 1, wobei das Polyimid-Siliciumoxid-Hybridharz eine Dehnungsrate von 50% oder mehr beim Bruch vorweist.

5. Negative Elektrode für eine nicht-wässriges-System Sekundärbatterie nach Anspruch 1, wobei in der Formel:
das "R¹" ein 3,3',4,4'-Biphenyltetracarboxyldianhydridrest ist;
das "R²" ein 4,4'-Diamindiphenyletherrest ist;
das "R³" eine Methylgruppe ist;
das "R⁴" eine Methoxygruppe ist;
das "q" von 1 bis 2500 ist;
das "r" von 1 bis 100 ist; und
das "m" von 1 bis 5 ist.

6. Negative Elektrode für eine nicht-wässriges-System Sekundärbatterie nach Anspruch 1, wobei 90 Mol-% oder mehr an Amidsäuregruppen in der Silan-modifizierten Polyaminsäure imidisiert sind, um das Bindemittel zu bilden.

7. Verfahren zur Herstellung für eine negative Elektrode für eine nicht-wässriges-System Sekundärbatterie, **dadurch gekennzeichnet, dass** eine negative Elektrode, die ein Polyimid-Siliciumoxid-Hybridharz beinhaltet, das als ein Bindemittel dient, mittels dem Folgenden erhalten wird:
einem Anfertigungsschritt des Anfertigens einer Zusammensetzung zum Bilden einer Negativelektrodenmischungsmaterialschicht, wobei eine Zusammensetzung zum Bilden einer Negativelektrodenmischungsmaterialschicht angefertigt wird, wobei die Zusammensetzung ein Negativelektrodenaktivmaterial, welches Silicium (Si) beinhaltet, und eine Bindemittelrohmateriallösung beinhaltet, welche eine Silan-modifizierte Polyamidsäure beinhaltet, die durch die folgende Formel ausgedrückt wird (wobei: "R¹" einen aromatischen Tetracarboxyldianhydridrest spezifiziert, der einen 3,3',4,4'-Biphenyltetracarboxyldianhydridrest in einer Menge von 90 Mol-% oder mehr beinhaltet; "R²" einen aromatischen Diaminrest spezifiziert, der einen 4,4'-Diaminodiphenyletherrest in einer Menge von 90 Mol-% oder mehr beinhaltet; "R³" eine Alkylgruppe spezifiziert, deren Anzahl an Kohlenstoffatomen von 1 bis 8 ist; "R⁴" eine Alkylgruppe oder eine Alkoxygruppe spezifiziert, deren Anzahl an Kohlenstoffatomen unabhängig voneinander von 1 bis 8 ist; "q" von 1 bis 5000 ist; "r" von 1 bis 1000 ist; und "m" von 1 bis 100 ist);
einem Bildungsschritt des Bildens einer Negativelektrodenmischungsmaterialschicht, wobei die Zusammensetzung auf einem Stromabnehmer bereitgestellt wird, wobei eine Oberflächenrauheit des Negativelektrodenstromabnehmers 4,5 µm oder weniger mittels einer Zehn-Punkt mittleren Rauheit (oder Rz) ist, um eine Negativelektrodenmischungsmaterialschicht zu bilden; und
einem Erwärmungsschritt des Erwärmens der Negativelektrodenmischungsmaterialschicht, damit die Silan-modifizierte Polyamidsäure sich einer Sol-Gel-Härtung und einem dehydrierenden Ringschluss unterzieht.

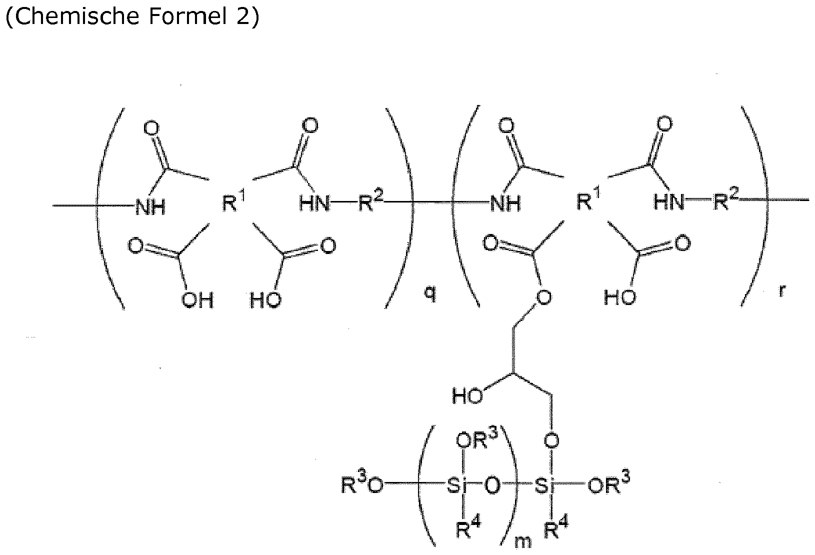

8. Verfahren zur Herstellung für eine negative Elektrode für eine nicht-wässriges-System Sekundärbatterie nach Anspruch 7, wobei der Erwärmungsschritt ein Schritt zum Ausführen des Erwärmens bei 350-430°C für 1-2 Stunden ist.

## Revendications

1. Électrode négative pour batterie secondaire à système non aqueux, dans laquelle l'électrode négative :
est équipée avec un collecteur de courant d'électrode négative, et une couche de matériau de mélange d'électrode négative comprenant un matériau de mélange d'électrode négative qui inclut un matériau actif d'électrode négative contenant du silicium (Si) et un agent de liaison au moins, la couche de matériau de mélange d'électrode négative étant formée sur une surface du collecteur de courant d'électrode négative ; et **caractérisée en ce que**
ledit agent de liaison inclut une résine hybride de polyimide-silice étant réalisée en soumettant un acide polyamique modifié avec un silane à un durcissement sol-gel et une fermeture de cycle par déshydratation, l'acide polyamique modifié avec un silane étant exprimé par la formule suivante (dans laquelle : « R¹ » spécifie un résidu dianhydride tétracarboxylique aromatique incluant un résidu dianhydride 3,3',4,4'-biphényltétracarboxylique dans une quantité de 90% par mole ou plus ; « R² » spécifie un résidu diamine aromatique incluant un résidu éther 4,4'-diaminodiphénylique dans une quantité de 90% par mole ou plus ; « R³ » spécifie un groupe alkyle dont le nombre d'atomes de carbone est de 1 à 8 ; « R⁴ » spécifie un groupe alkyle ou un groupe alcoxy dont le nombre d'atomes de carbone est de 1 à 8 indépendamment l'un de l'autre ; « q » est de 1 à 5 000 ; « r » est de 1 à 1 000 ; et « m » est de 1 à 100) : 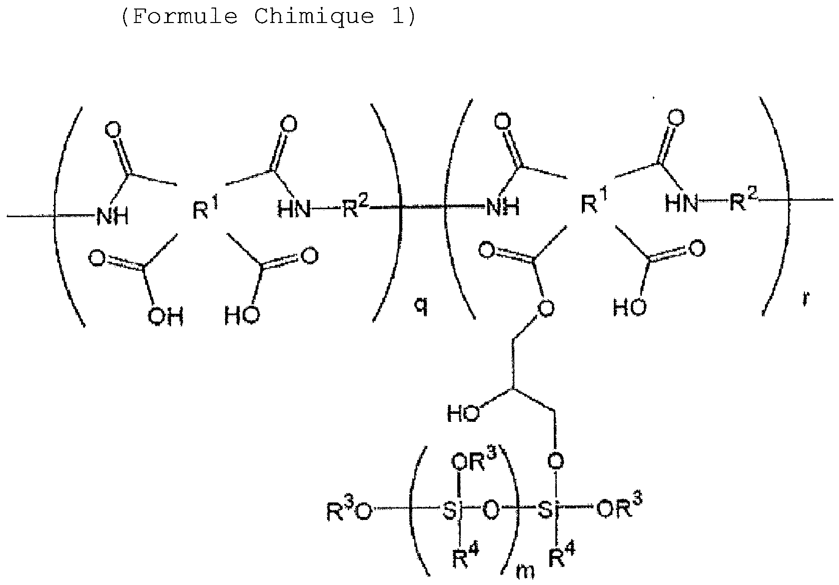
dans laquelle une rugosité de surface dudit collecteur de courant d'électrode négative est 4,5 µm ou moins en rugosité moyenne de dix points (ou Rz).

2. Électrode négative pour batterie secondaire à système non aqueux selon la revendication 1, dans laquelle la rugosité de surface dudit collecteur de courant d'électrode négative est de 1,5 à 3 µm en rugosité moyenne de dix points (ou Rz).

3. Électrode négative pour batterie secondaire à système non aqueux selon la revendication 1, dans laquelle ledit collecteur de courant d'électrode négative est une feuille métallique déposée ou une feuille métallique enroulée d'électrode qui n'est pas soumise à un quelconque traitement de rugosification de surface.

4. Électrode négative pour batterie secondaire à système non aqueux selon la revendication 1, dans laquelle ladite résine hybride de polyimide-silice affiche un taux d'allongement de 50% ou plus à la rupture.

5. Électrode négative pour batterie secondaire à système non aqueux selon la revendication 1, dans laquelle :
le « R¹ » est un résidu dianhydride 3,3',4,4'-biphényltétracarboxylique ;
le « R² » est un résidu éther 4,4'-diaminodiphénylique ;
le « R³ » est un groupe méthyle ;
le « R⁴ » est un groupe méthoxy ;
le « q » est de 1 à 2 500 ;
le « r » est de 1 à 100 ; et
le « m » est de 1 à 5 ; dans ladite formule.

6. Électrode négative pour batterie secondaire à système non aqueux selon la revendication 1, dans laquelle 90% par mole ou plus de groupes acide d'amide dans ledit acide polyamique modifié avec un silane sont imidisés pour réaliser ledit agent de liaison.

7. Procédé de fabrication pour une électrode négative pour batterie secondaire à système non aqueux étant **caractérisé en ce qu'**une électrode négative incluant une résine hybride de polyimide-silice qui sert comme un agent de liaison est obtenue comme suit :
une étape de préparation pour préparer une composition pour former une couche de matériau de mélange d'électrode négative, dans laquelle une composition pour former une couche de matériau de mélange d'électrode négative est préparée, la composition incluant un matériau actif d'électrode négative, qui inclut du silicium (Si), et une solution de matière première d'agent de liaison, qui inclut un acide polyamique modifié avec un silane qui est exprimé par la formule suivante (dans laquelle : «R¹» spécifie un résidu dianhydride tétracarboxylique aromatique incluant un résidu dianhydride 3,3',4,4'-biphényltétracarboxylique dans une quantité de 90% par mole ou plus ; «R²» spécifie un résidu diamine aromatique incluant un résidu éther 4,4'-diaminodiphénylique dans une quantité de 90% par mole ou plus ; « R³ » spécifie un groupe alkyle dont le nombre d'atomes de carbone est de 1 à 8 ; « R⁴ » spécifie un groupe alkyle ou un groupe alcoxy dont le nombre d'atomes de carbone est de 1 à 8 indépendamment l'un de l'autre ; « q » est de 1 à 5 000 ; « r » est de 1 à 1 000 ; et « m » est de 1 à 100) ;
une étape de formation pour former une couche de matériau de mélange d'électrode négative, dans laquelle ladite composition est prévue sur un collecteur de courant, dans laquelle une rugosité de surface dudit collecteur de courant d'électrode négative est 4,5 µm ou moins en rugosité moyenne de dix points (ou Rz), afin de former une couche de matériau de mélange d'électrode négative ; et
une étape de chauffage pour chauffer ladite couche de matériau de mélange d'électrode négative afin que ledit acide polyamique modifié avec un silane subisse un durcissement sol-gel et une fermeture de cycle par déshydratation.

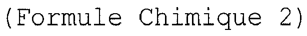

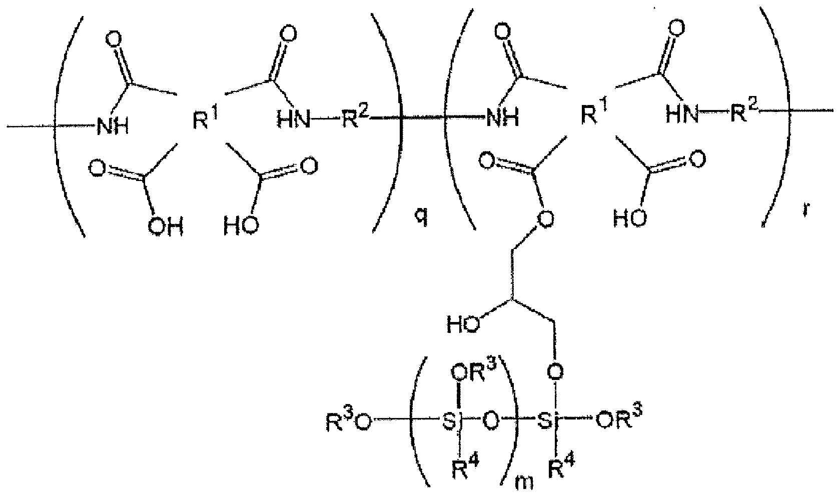

8. Procédé de fabrication pour une électrode négative pour batterie secondaire à système non aqueux selon la revendication 7, dans lequel ladite étape de chauffage est une étape d'exécution du chauffage à 350 à 430°C pendant 1 à 2 heures.
